# EUROPEAN PATENT APPLICATION

(11) **EP 4 749 794 A1**
(43) Date of publication of application: **27.05.2026**
(21) Application number: 24860362.3
(22) Date of filing: 27.08.2024
(51) Int. Cl.: H01M 50/30, H01M 50/342, H01M 50/325, H01M 50/103

(54) **SECONDARY BATTERY**

(30) Priority: 31.08.2023 KR 20230115109
(71) Applicant: LG Energy Solution, Ltd., Seoul 07335 (KR)
(72) Inventor: YOON, Doo Han, Daejeon 34122 (KR); PARK, Jun Kyu, Daejeon 34122 (KR); LEE, Jin Kyu, Daejeon 34122 (KR)
(74) Representative: Plasseraud IP
(86) International application number: PCT/KR2024/012738
(87) International publication number: WO 2025/048442

(57) **Abstract**

Disclosed is a secondary battery comprising: a stacked electrode assembly comprising a plurality of unit cells stacked in a first direction and having electrode leads at both ends thereof in a second direction perpendicular to the first direction; a multifunctional terminal block (MTB) at at least one end of the stacked electrode assembly; and a laminate sheet surrounding the side surface of the stacked electrode assembly to define a cell inner space.

## Description

### Cross-Reference to Related Applications

This application is a National Phase entry pursuant to 35 U.S.C. 371 of International Application PCT/KR2024/006940 filed May 22, 2024, which claims the benefit of priority based on Korean Patent Application No. 10-2023-0115109, filed on August 31, 2023, the disclosures of which are incorporated herein by reference in their entirety.

### Technical Field

The present disclosure relates to a secondary battery, and more particularly to a secondary battery capable of effectively releasing gas generated inside and preventing moisture infiltration.

### Background

Unlike primary batteries, secondary batteries can be charged and discharged many times. Secondary batteries are widely used as an energy source for various wireless devices such as handsets, laptops, and wireless vacuum cleaners. Recently, as the manufacturing cost per unit capacity of secondary batteries has decreased dramatically because of improved energy density and economies of scale, and as the cruising distance of battery electric vehicles (BEVs) has increased to an equivalent level to that of fuel vehicles, the major use of secondary batteries has shifted from mobile devices to mobility.

Meanwhile, recently, the demand for large-capacity battery packs applied to electric vehicles has been increasing. Battery packs mounted in vehicles are required to have large capacity as well as improved safety.

### Summary

The present disclosure is directed to provide a secondary battery that is capable of effectively releasing gas generated inside and preventing moisture infiltration.

The present disclosure solves the above technical problem by providing a secondary battery comprising: a stack-type electrode assembly comprising a plurality of unit batteries stacked in a first direction and having electrode leads on the both ends in a second direction perpendicular to the first direction; a multifunctional terminal block (MTB) on at least one end of the stack-type electrode assembly; and a laminate sheet wrapping around sides of the stack-type electrode assembly to define a cell interior space. The MTB may include an electrode terminal part electrically connected to an electrode lead of the stack-type electrode assembly; a check valve configured to release gas in the cell interior space when a pressure of the gas is in excess of a first pressure; and a rupture disk configured to rupture to release the gas when the pressure of the gas in the cell interior space increases to a second pressure in excess of the first pressure.

In some exemplary examples, the check valve is configured to change from a closed state to an open state when the pressure of the gas in the cell interior space exceeds the first pressure, and is configured to change from an open state to a closed state after the pressure in the cell interior space relieves to a pressure lower than the first pressure.

In some exemplary examples, the check valve may include a conduit part in fluid-communication with the cell interior space and being open to the exterior of the secondary battery; a valve packing in the conduit part, and movable toward the exterior of the secondary battery by the pressure of the gas in the cell interior space; and an elastic body that is configured to allow the valve packing to return to an original position of the valve packing depending on the pressure of the gas in the cell interior space.

In some exemplary examples, the conduit part includes a first stop protrusion at an end of the conduit part closer to the cell interior space; and a second stop protrusion on an inner circumferential surface of the conduit part spaced apart from the first stop protrusion, wherein the valve packing is between the first stop protrusion and the second stop protrusion, and wherein the elastic body may be between the valve packing and the second stop protrusion.

In some exemplary examples, the check valve may include an o-ring between the valve packing and the conduit part, wherein the valve packing may include a tapered side surface having a decreasing diameter toward the cell interior space, wherein the tapered side surface is configured to form the closed state by being in airtight contact with the o-ring, and wherein the tapered side surface is configured to form the open state by being spaced apart from the o-ring.

In some exemplary examples, the check valve may further comprise a waterproof membrane at an end of the conduit part.

In some exemplary examples, the waterproof membrane may comprise a material that is permeable to carbon dioxide.

**In** some exemplary examples, the waterproof membrane may include two or more thin films stacked.

In some exemplary examples, the waterproof membrane may comprise a first layer of a porous type and a second layer of a non-porous type.

In some exemplary examples, the first layer may comprise a fluorine-based polymeric membrane and the second layer may comprise a silicone-based polymeric membrane.

In some exemplary examples, further comprising an external collector connected in gas communication with the check valve and configured to capture gas released from the check valve. In this case, the conduit part may not include a waterproof membrane at an end thereof.

An other aspect of the present disclosure provides a secondary battery comprising: a stack-type electrode assembly having a plurality of unit batteries stacked in a first direction, extending in a second direction perpendicular to the first direction and having electrode leads at ends; a multifunctional terminal block (MTB) coupled to the electrode leads of the stack-type electrode assembly; and a laminate sheet enclosing the stack-type electrode assembly with the MTB to define a cell interior space. The MTB includes an electrode terminal part electrically connected to the electrode leads of the stack-type electrode assembly; a busbar electrically connecting the electrode leads and the electrode terminal part; and a check valve configured to release gas in the cell interior space when a pressure of the gas is in excess of a first pressure. The check valve includes a conduit part in fluid-communication with the cell interior space and being open to the exterior of the secondary battery; and a waterproof membrane at an outer end of the conduit part.

In some exemplary examples, the waterproof membrane may comprise a hydrophobic material.

In some exemplary examples, the waterproof membrane may have a permeation ratio of CO₂:N₂ of 4:1 to 50:1 when measured according to DIN 53536 standard.

The secondary battery according to embodiments of the present disclosure can effectively discharge gas generated inside and has the effect of preventing moisture infiltration.

However, the technical effects that can be obtained in exemplary embodiments of the present disclosure is not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### Brief Description of the Drawings

FIG. 1a is a perspective view of an important part of a secondary battery according to an embodiment of the present disclosure.
FIG. 1b is a partial perspective view of an enlarged portion of the secondary battery of FIG. 1a.
FIG. 2 is a schematic perspective view illustrating the removal of a laminate sheet from the secondary battery of FIG. 1a.
FIG. 3 is a schematic diagram illustrating a cross section of a first MTB cut in a plane passing through an electrode terminal part and perpendicular to a third direction.
FIG. 4a is a cross-sectional view illustrating a check valve according to one embodiment of the present disclosure.
FIG. 4b is a cross-sectional view illustrating the check valve in an open state.
FIG. 5 is a partial exploded perspective view illustrating a coupling method of laminate sheets of a secondary battery according to an embodiment of the present disclosure.
FIG. 6 is a partial cross-sectional view of a laminate sheet according to an embodiment of the present disclosure.
FIG. 7a is a perspective view illustrating an important part of a secondary battery according to an embodiment of the present disclosure.
FIG. 7b is a partial perspective view illustrating an enlarged portion of the secondary battery of FIG. 7a.
FIG. 8 is a side view of a secondary battery according to another embodiment of the present disclosure.
FIG. 9 is a perspective view illustrating an important part of a secondary battery according to another embodiment of the present disclosure.

### Detailed Description

Hereinafter, embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members or a combination thereof described in the specification, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein include each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (first embodiment)

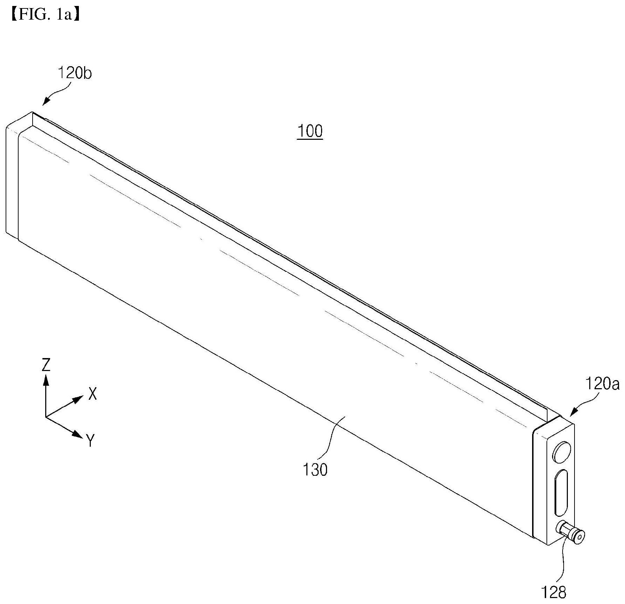

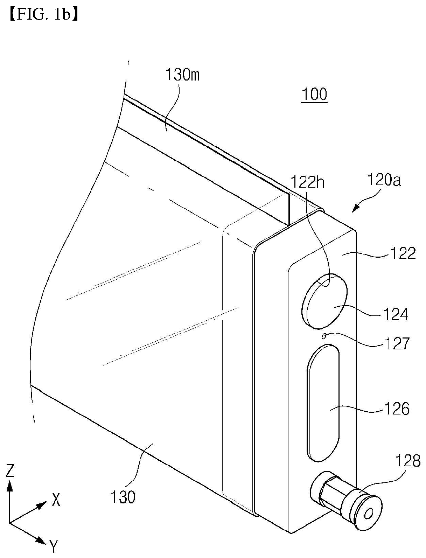

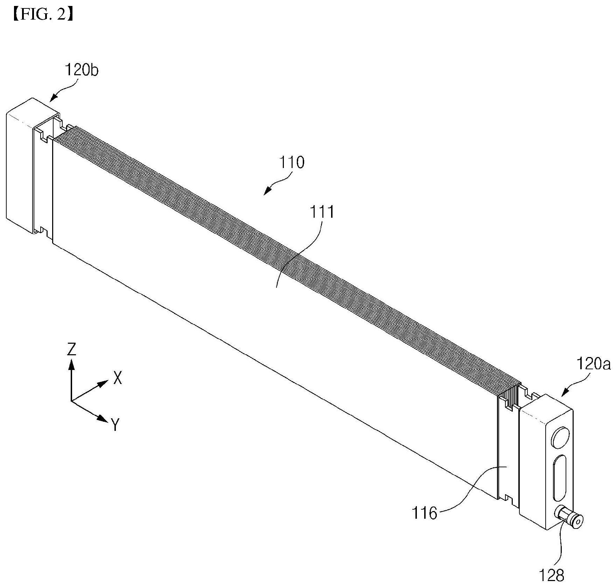

FIG. 1a is a perspective view of an important part of a secondary battery 100 according to an embodiment of the present disclosure. FIG. 1b is a partial perspective view of an enlarged portion of the secondary battery 100 of FIG. 1a. FIG. 2 is a schematic perspective view illustrating the removal of a laminate sheet 130 from the secondary battery 100 of FIG. 1a.

In the following drawings, the secondary battery 100 is shown as defined in a vertical coordinate system defined by a first direction along the X-axis, a second direction along the Y-axis, and a third direction along the Z-axis, perpendicular to each other; however, the first direction, second direction, and third direction should be vertical relative to each other and are not particularly limited.

Referring to FIG. 1a to FIG. 2, the secondary battery 100 includes a stack-type electrode assembly 110, multifunctional terminal blocks (MTB) 120a, 120b, and a laminate sheet 130.

The stack-type electrode assembly 110 may include a plurality of unit batteries 111 stacked in a first direction (e.g., X-axis direction). Each of the unit batteries 111 may have an electrode material applied to a metal foil operating as a current collector.

Each of the unit batteries 111 may have a thin plate-shaped body extending in a second direction (e.g., Y-axis direction). Each of the unit batteries 111 may be a positive electrode unit battery or a negative electrode unit battery. In some embodiments, the plurality of unit batteries 111 may be one positive electrode unit battery and one negative electrode unit battery alternately stacked. The positive electrode unit battery and the negative electrode unit battery may be separated from each other by a separator.

In some other embodiments, the plurality of unit batteries 111 may be a plurality of positive electrode unit batteries and a plurality of negative electrode unit batteries alternately stacked. The plurality of positive electrode unit batteries and the plurality of negative electrode unit batteries may be separated from each other by a separator.

The stack-type electrode assembly 110 may have electrode leads 116 at both ends in the second direction (e.g., Y-axis direction). The electrode leads 116 may be electrically connected with electrode tabs of the plurality of unit batteries 111. One electrode lead 116 may have one or more electrode taps connected thereto. In some embodiments, two or more electrode taps may be connected to the one electrode lead 116.

In some embodiments, the stack-type electrode assembly 110 may have two electrode leads 116 on one side and two electrode leads 116 on the other side. In this case, half of the plurality of unit batteries 111 included in the stack-type electrode assembly 110 may be coupled to the first electrode lead on one side and coupled to the second electrode lead on the other side. Further, the other half of the plurality of unit batteries 111 included in the stack-type electrode assembly 110 may be coupled to the third electrode lead on one side and to the fourth electrode lead on the other side. However, the present disclosure is not limited thereto.

In some embodiments, the stack-type electrode assembly 110 may have one or three or more electrode leads on one side. In some embodiments, the stack-type electrode assembly 110 may have one or three or more electrode leads on the other side.

A first MTB 120a may be provided at an end in the second direction (e.g., Y-axis direction) of the stack-type electrode assembly 110 and a second MTB 120b may be provided at the other end. One of the first MTB 120a and the second MTB 120b may be electrically connected to a cathode side of the stack-type electrode assembly 110, and the other may be electrically connected to an anode side of the stack-type electrode assembly 110. The second MTB 120b may have substantially the same configuration as the first MTB 120a, differing only in polarity. Hereinafter, the first MTB 120a will be described, a person skilled in the art will be able to understand the configuration of the second MTB 120b from this.

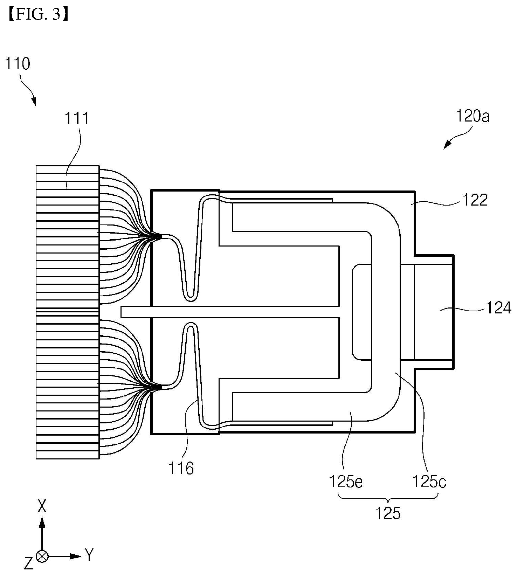

The first MTB 120a may include an MTB housing 122, an electrode terminal part 124 accommodated within the MTB housing 122, and a busbar 125 electrically connecting the electrode terminal part 124 and the electrode leads 116 (refer to FIG. 3).

The MTB housing 122 may be made of material having relatively high rigidity, such as metal, and defines the outer peripheral of the first MTB 120a. In some embodiments, the MTB housing 122 may be made of aluminum (Al), nickel (Ni), iron (Fe), cobalt (Co), chromium (Cr), manganese (Mn), or an alloy containing one or more among them.

The MTB housing 122 may include a through-hole 122h that exposes the electrode terminal part 124 described hereinafter. The through-hole 122h may be provided in the MTB housing 122 such that the electrode terminal part 124 is exposed towards the second direction (e.g., Y-axis direction). Thus, the through-hole 122h may be provided on a plane perpendicular to the second direction (e.g., Y-axis direction) of the MTB housing 122. In addition, the through-hole 122h may have an opening in the length direction of the stack-type electrode assembly 110. The shape of the through-hole 122h may be configured to conform to the outer peripheral shape of the portion of the electrode terminal part 124 exposed to the outside.

A person skilled in the art would understand that the first MTB 120a may further comprise, as needed, a through-hole for a rupture disk, a through-hole for a check valve, and a through-hole for an electrolyte inlet, etc. as described hereinafter.

The electrode terminal part 124 may be accommodated within the MTB housing 122 and may be exposed through the through-hole 122h. The electrode terminal part 124 may be made of a metal or metal alloy having low electrical resistance, such as copper (Cu), aluminum (Al), nickel (Ni), iron (Fe), platinum (Pt), manganese (Mn), or an alloy containing one or more among them.

In some embodiments, the exposed surface of the electrode terminal part 124 that faces outward from the MTB housing 122 may be a plane. In some embodiments, the exposed surface may have a plane extending perpendicular to the second direction (e.g., Y-axis direction).

In some embodiments, an electrically insulating spacer may be provided between the electrode terminal part 124 and the MTB housing 122 such that the electrode terminal part 124 is electrically insulated with the MTB housing 122.

In some embodiments, the first MTB 120a may include a rupture disk 126 configured to rupture in the event of an excessive increase in internal pressure of the secondary battery 100, thereby releasing gas that is the cause of the excessively increased internal pressure. The rupture disk 126 is not restored to its original state when ruptured due to a thermal event occurring within the internal of the secondary battery 100. The rupture disk 126 may be any rupture disk known in the art and is not particularly limited thereto.

In some embodiments, the first MTB 120a may further include a check valve 128. The check valve 128 may be configured to open for gas release when the internal pressure of the secondary battery 100 becomes higher than a predetermined first pressure, and to close again when the internal pressure is relieved by the release of the gas, for example, lower than the first pressure. The check valve 128 may be without a portion that is ruptured by the release of the gas and may be restored to its original state after the release of the gas inside. The check valve 128 will be described in more detail later.

In some embodiments, the first MTB 120a may further include an electrolyte inlet 127 into which electrolyte may be injected. In some embodiments, the electrolyte inlet 127 may be provided in any one of the first MTB 120a and the second MTB 120b.

The electrolyte injected through the electrolyte inlet 127 may be any electrolyte conventionally used for lithium secondary batteries and is not particularly limited thereto.

Within the first MTB 120a, a busbar may be further provided. FIG. 3 is a schematic diagram illustrating a cross section of a first MTB 120a cut in a plane passing through the electrode terminal part 124 and perpendicular to a third direction (e.g., Z-axis direction).

Referring to FIG. 3, the busbar 125 may be provided to form a surface contact with the electrode terminal part 124. The busbar 125 may be made of a metal material having a low electrical resistance. In some embodiments, the busbar 125 may be made of copper (Cu), nickel (Ni), aluminum (Al), iron (Fe), cobalt (Co), platinum (Pt), molybdenum (Mo), tin (Sn), palladium (Pd), or an alloy comprising one or more among them.

The busbar 125 may be configured to form surface contact with the electrode leads 116 of the stack-type electrode assembly 110. In some embodiments, the busbar 125 may be coupled to the electrode leads 116 by welding. In some embodiments, the busbar 125 may be coupled with the electrode leads 116 by fasteners, such as rivets.

In some embodiments, the busbar 125 may include a plane-shaped center part 125c extending horizontally in the first direction (e.g., X-axis direction) and an edge part 125e bending and extending from the center part 125c. The center part 125c may be configured to form a generally U-shaped cross-sectional form together with the edge part 125e and may extend in the third direction (e.g., Z-axis direction). In some embodiments, the edge part 125e may have a plane extending perpendicular to the first direction (e.g., X-axis direction).

The busbar 125 may be in surface contact with the electrode terminal part 124 at the center part 125c. The busbar 125 may be in surface contact with the electrode leads 116 at the edge part 125e.

In some embodiments, the electrode leads 116 may include a pre-bended portion that is bent at a portion that is not in contact with the busbar 125. The pre-bended portion may prevent stress from being concentrated in a specific portion of the electrode leads 116 by external forces applied to the stack-type electrode assembly 110, resulting in increased safety.

Because the secondary battery 100 of embodiments of the present disclosure accommodates all of the units having respective functions within the MTB 120a, 120b, such as the electrode terminal part 124, the busbar 125, the rupture disk 126, the check valve 128, the electrolyte inlet 127, and the like, the battery cell itself has functions equivalent to a conventional battery module. The secondary battery 100 of embodiments of the present disclosure can therefore have a high degree of freedom and compatibility and is advantageous for implementing cell-to-pack.

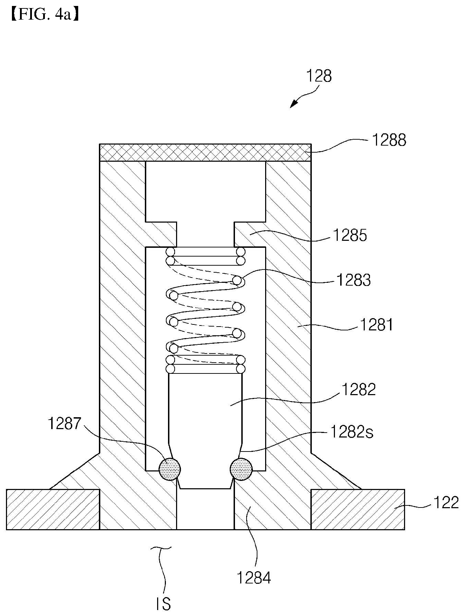

FIG. 4a is a cross-sectional view illustrating a check valve according to one embodiment of the present disclosure.

Referring to FIG. 4a, the check valve may include a conduit part 1281 that penetrates the MTB housing 122 and extends outside, a valve packing 1282 provided within the conduit part 1281, and an elastic body 1283 that provides resilience to enable the valve packing to return to its original position.

In some exemplary examples, the conduit part 1281 may be in communication with a cell interior space IS surrounded by the laminate sheet 130. The cell interior space IS may be defined by the laminate sheet 130 and the MTB housing 122.

In some exemplary examples, the conduit part 1281 may be provided with a first stop protrusion 1284 on the side of the cell interior space IS. In some exemplary examples, a second stop protrusion 1285 may be further provided within the conduit part 1281 spaced apart from the first stop protrusion 1284.

The valve packing 1282 may be provided between the first stop protrusion 1284 and the second stop protrusion 1285. Further, the elastic body 1283 may be provided between the valve packing 1282 and the second stop protrusion 1285. The second stop protrusion 1285 may restrict movement of the elastic body 1283.

The valve packing 1282 may be configured to move toward the exterior of the secondary battery 100 by pressure in the cell interior space IS. An outer diameter of the valve packing 1282 may be smaller than an inner diameter of the conduit part 1281, and a side surface of the valve packing 1282 may not substantially contact with an inner surface of the conduit part 1281.

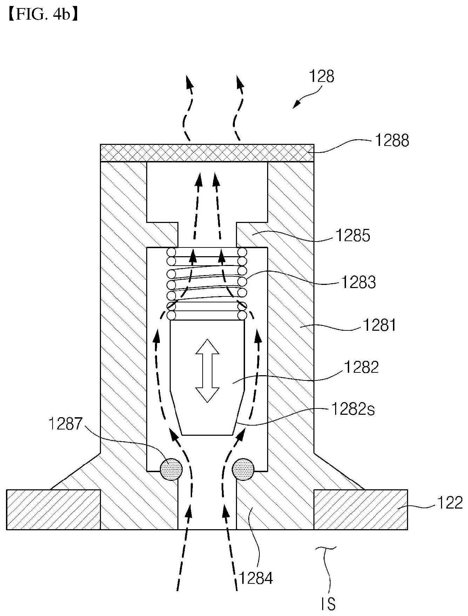

The valve packing 1282 may be pressurized and moved toward the exterior of the secondary battery 100 by the pressure in the cell interior space IS when the pressure in the cell interior space IS exceeds a predetermined pressure, such as a first pressure. As the valve packing 1282 is moved toward the exterior of the secondary battery 100 by the pressure of the cell interior space IS, the check valve 128 may be in an open state. FIG. 4b is a cross-sectional view illustrating the check valve in an open state.

Referring to FIG. 4b, the valve packing 1282 may be moved by pressure in the cell interior space IS, and the elastic body 1283 may be compressed correspondingly to the pressure in the cell interior space IS. Gas in the cell interior space IS may pass through the space on the side surface of the valve packing 1282 and be released through the elastic body 1283 to the exterior of the secondary battery 100.

When the pressure in the cell interior space IS becomes lower than a predetermined pressure, such as the first pressure, the valve packing 1282 may be returned to its original position by the resilience of the elastic body 1283. With the valve packing 1282 returning to its original position, the check valve 128 may be transitioned to a closed state.

In some exemplary examples, an o-ring 1287 may be provided between the valve packing 1282 and the first stop protrusion 1284 for airtight sealing. In some exemplary examples, the o-ring 1287 may be fixed to the first stop protrusion 1284. In this case, even if the valve packing 1282 is moved, the o-ring 1287 may remain on the first stop protrusion 1284, as shown in FIG. 4b.

In some other exemplary examples, the o-ring 1287 may be fixed on a side surface of the valve packing 1282. In this case, the o-ring 1287 may move with the valve packing 1282 in the open state of the check valve 128.

The valve packing 1282 may have tapered side surfaces 1282s such that they have a decreasing diameter toward the cell interior space IS. The o-ring 1287 may contact with the valve packing 1282, particularly at the tapered side surfaces 1282s. The tapered side surfaces 1282s may be in airtight contact with the o-ring 1287 to form a closed state. Alternatively, the tapered side surface 1282s may form an open state by being spaced apart from the o-ring 1287.

An end of the conduit part 1281 may be provided with a waterproof membrane 1288. The waterproof membrane 1288 may prevent infiltration of moisture, such as water or water vapor, into the cell interior space IS through the check valve 128.

In some exemplary examples, the waterproof membrane 1288 may comprise a material that prevents moisture infiltration but allows carbon dioxide (CO₂) to pass through relatively better. Thus, the waterproof membrane 1288 can facilitate the release of CO₂ generated in the cell interior space IS to the outside.

In some exemplary examples, the waterproof membrane 1288 may include two or more thin films stacked. In some exemplary examples, the waterproof membrane 1288 may comprise a hydrophobic material. Specifically, the waterproof membrane 1288 may include a first layer of a porous type and a second layer of a non-porous type. The first layer may include a fluorine-based polymeric membrane, and the second layer may include a silicone-based polymeric membrane.

In some exemplary examples, the waterproof membrane 1288 may comprise a material that is selectively more permeable to CO₂ compared to nitrogen(N₂). For example, the waterproof membrane 1288 may comprise a material having a permeation ratio of CO₂: N₂ of from approximately 4:1 to approximately 50:1 when measured according to DIN 53536 standard. If CO₂ is excessively difficult to permeate relative to N₂, it may be difficult for gas that has passed through the side surfaces of the valve packing 1282 to release smoothly to the outside. If permeation of CO₂ is excessively easy compared to N₂, gas from outside may infiltrate into the cell interior space IS in the open state. In some exemplary examples, the permeation ratio of the CO₂: N₂ is from about 4:1 to about 50:1, about 5:1 to about 48:1, about 6:1 to about 45:1, about 7:1 to about 43:1, about 8:1 to about 40:1, about 9:1 to about 38:1, about 10:1 to about 35: 1, about 11:1 to about 33:1, about 12:1 to about 30:1, about 13:1 to about 28:1, about 14:1 to about 25:1, about 15:1 to about 23:1, about 16:1 to about 20:1, or a value between any two of these ratios.

The fluorinated polymeric membrane may include a perfluorinated polymeric resin, such as polytetrafluoroethylene (PTFE). The silicone-based polymeric membrane may comprise a polymeric resin such as polydimethyl siloxane (PDMS). However, the present disclosure is not limited thereto.

Referring again to FIGS. 1a to 2, the rupture disk 126 may be configured to rupture when the pressure in the cell interior space IS increases to a second pressure above the first pressure, thereby causing gas release in the cell interior space IS. As previously described, the rupture disk 126, once opened to release the gas in the cell interior space IS, does not return to its original state.

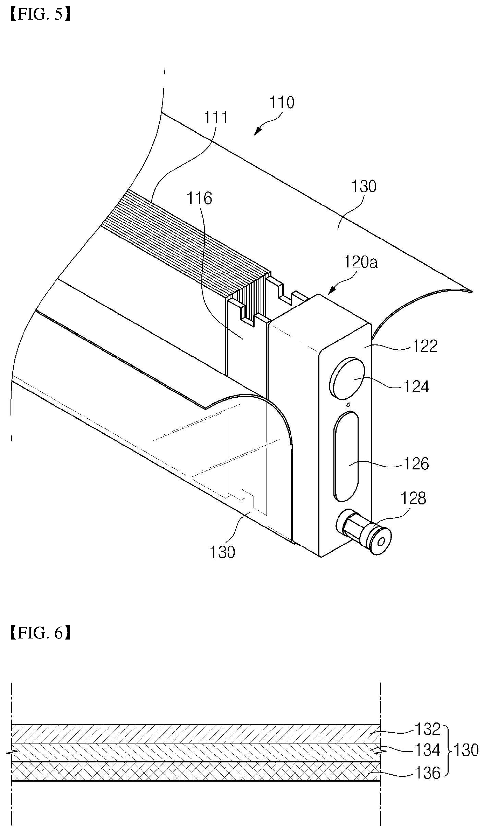

FIG. 5 is a partial exploded perspective view illustrating a coupling method of laminate sheets 130 of a secondary battery 100 according to an embodiment of the present disclosure. FIG. 6 is a partial cross-sectional view of a laminate sheet 130 according to an embodiment of the present disclosure.

Referring to FIG. 5 and FIG. 6, the laminate sheet 130 may be configured to wrap around a side surface of the stack-type electrode assembly 110. In some embodiments, the laminate sheet 130 may be attached to the side surfaces of the MTB 120a, 120b such that at least partially covering the side surfaces of the MTB 120a, 120b. In some embodiments, the laminate sheet 130 may provide overall covering of side surfaces parallel to the second direction (e.g., Y-axis direction) of the MTB 120a, 120b. In some other embodiments, the laminate sheet 130 may cover only a portion of the side surfaces parallel to the second direction (e.g., Y-axis direction) of the MTB 120a, 120b.

The laminate sheet 130 may include a metal layer 134 having flexibility, an inner resin layer 132 provided on one side of the metal layer 134, and an outer resin layer 136 provided on the other side of the metal layer 134.

The metal layer 134 may maintain an appropriate thickness, prevent water vapor, oxygen, and other gases from penetrating from the outside to the inside, and prevent electrolyte leakage. In some embodiments, the metal layer 134 may include, any one or more selected among iron (Fe), carbon (C), chromium (Cr), manganese (Mn), nickel (Ni), aluminum (Al), and alloys thereof, but is not limited thereto. When the metal layer 134 is made of an ironcontaining material, mechanical strength is enhanced, and when the metal layer 134 is made of an aluminum material, flexibility is improved, thereby conventionally aluminum metal foil is mainly used.

The metal layer 134 may be configured to have an appropriate thickness and mechanical strength such that it can be deformed comparatively easily by externally applied forces and does not develop cracks or holes even after repeated deformation.

In some embodiments, the metal layer 134 may have a thickness of from about 20 micrometers (*µ*m) to about 100 *µ*m. In some embodiments, the metal layer 134 may have a thickness of about 20 *µ*m to about 100 *µ*m, about 25 *µ*m to about 95 *µ*m, about 30 *µ*m to about 90 *µ*m, about 35 *µ*m to about 85 *µ*m, about 40 *µ*m to about 80 *µ*m, about 45 *µ*m to about 75 *µ*m, about 50 *µ*m to about 70 *µ*m, about 55 *µ*m to about 60 *µ*m, or a range between any two of these figures.

The inner resin layer 132 provided on one side of the metal layer 134 may include a thermal adhesive layer. In some embodiments, the inner resin layer 132 may comprise a polyolefin-based material capable of performing a sealing action through fusion. In some embodiments, the inner resin layer 132 may comprise a modified propylene, such as casted polypropylene (CPP), or a polypropylene-butylene-ethylene terpolymer.

The inner resin layer 132 may be formed by coating or laminating one side of the metal layer 134.

The outer resin layer 136 provided on the other side of the metal layer 134 may serve as a base substrate and a protective layer for forming the laminate sheet 130. The outer resin layer 136 may comprise an insulating material such as polyethylene terephthalate (PET) or nylon, etc.

In some embodiments, the inner resin layer 132 and the outer resin layer 136 may each have a thickness of from about 10 micrometers (*µ*m) to about 50 *µ*m. In some embodiments, each of the inner resin layer 132 and the outer resin layer 136 may have a thickness of about 10 *µ*m to about 50 *µ*m, about 12 *µ*m to about 48 *µ*m, about 15 *µ*m to about 45 *µ*m, about 17 *µ*m to about 43 *µ*m, about 20 *µ*m to about 40 *µ*m, about 22 *µ*m to about 38 *µ*m, about 25 *µ*m to about 35 *µ*m, about 27 *µ*m to about 33 *µ*m, or a range between any two of these figures.

In some embodiments, an adhesive resin layer may be further provided between the inner resin layer 132 and the metal layer 134 and/or between the outer resin layer 136 and the metal layer 134. The adhesive resin layer may be provided for smooth attachment between different types of materials. The adhesive resin layer may be formed as a single layer or as a multilayer. In some embodiments, the adhesive resin layer may comprise a polyolefin-based resin, a polyurethane-based resin, an epoxy-based resin, or a mixture thereof.

In some embodiments, the inner resin layer 132 may be fused to the side surfaces of the MTB 120a, 120b at both ends in the second direction (e.g., Y-axis direction). By the inner resin layer 132 fused to while surrounding the side surfaces of the MTB 120a, 120b, the stack-type electrode assembly 110 may be enclosed within the secondary battery. The inner resin layer 132 may be fused to the side surfaces by being melted by heating and then cooled while in contact with the side surfaces of the MTB 120a, 120b.

The laminate sheet 130 that surrounds the side surfaces of the MTB 120a, 120b and the stack-type electrode assembly 110 may be adhered to and fused to the inner resin layers 132 that face each other at the combination part 130m.

The combination part 130m may be located on any one side of the stack-type electrode assembly 110. In some embodiments, the combination part 130m may be located in a third direction (e.g., Z-axis direction) of the stack-type electrode assembly 110, after surrounding the stack-type electrode assembly 110.

As described above, in the secondary battery 100 of embodiments of the present disclosure, unit batteries can be accommodated above the thickness defined by a conventional forming process for the laminate sheet 130 because the laminate sheet 130 directly surrounds the stack-type electrode assembly 110 without the forming process for the laminate sheet 130. Thus, the secondary battery 100 of embodiments of the present disclosure is advantageous for realizing large capacity cells.

### (second embodiment)

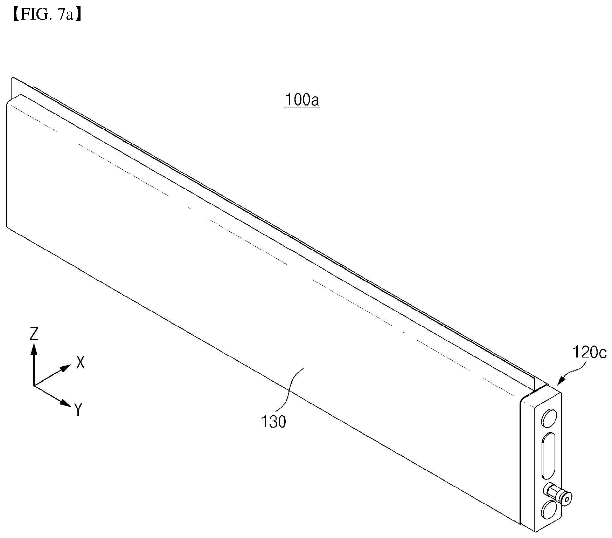

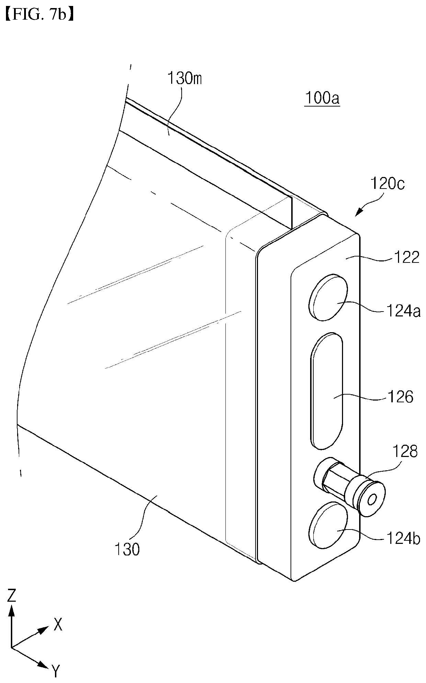

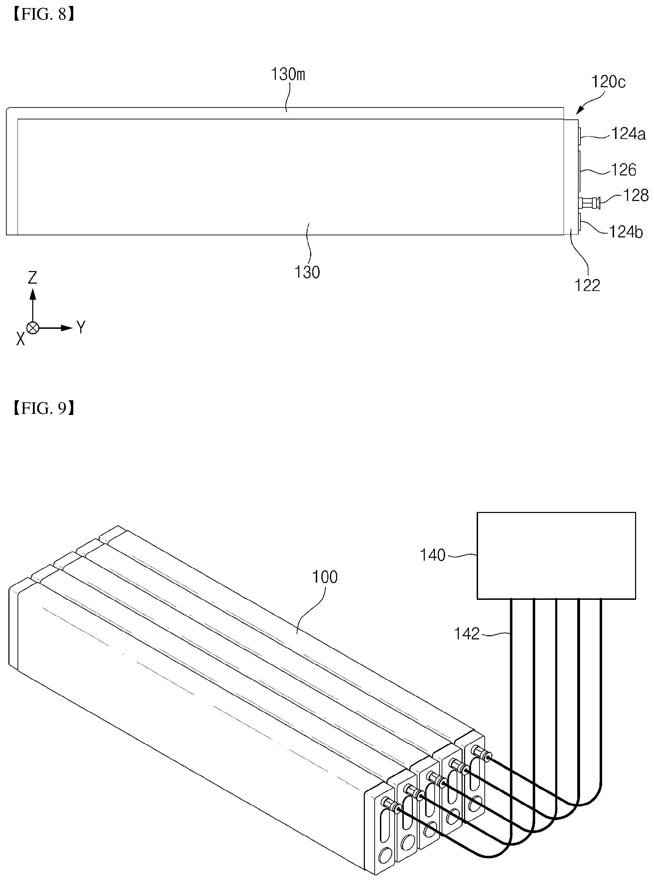

FIG. 7a is a perspective view illustrating an important part of a secondary battery according to an embodiment of the present disclosure. FIG. 7b is a partial perspective view illustrating an enlarged portion of the secondary battery of FIG. 7a. FIG. 8 is a side view of a secondary battery according to another embodiment of the present disclosure.

The secondary battery 100a differs from the embodiments described with reference to FIGS. 1a to 5 in that MTB is provided on only one side of the stack-type electrode assembly extending in the second direction (e.g., Y-axis direction). Accordingly, hereinafter will be described with a focus on such difference, and further description will be omitted regarding overlapping parts.

Referring to FIGS. 7a to 8, because the MTB 120c is provided only on one side of the stack-type electrode assembly and not on both sides of the stack-type electrode assembly, both electrodes of the stack-type electrode assembly are connected to the MTB 120c. In other words, the MTB 120c is provided only on one side of the second direction (e.g., Y-axis direction) of the stack-type electrode assembly, and the other side of the second direction (e.g., Y-axis direction) of the stack-type electrode assembly may extend the combination part 130m without the MTB.

Since the MTB is provided on only one side of the stack-type electrode assembly, the MTB 120c is provided with a first electrode terminal part 124a and a second electrode terminal part 124b of different polarities. One of the first electrode terminal part 124a and the second electrode terminal part 124b may be a terminal part corresponding to a cathode and the other may be a terminal part corresponding to an anode.

In FIG. 7b, a rupture disk 126 is shown as provided between the first electrode terminal part 124a and the second electrode terminal part 124b, but the relative positions of the first electrode terminal part 124a, the second electrode terminal part 124b, and the rupture disk 126 within the MTB 120c are not particularly limited.

The combination part 130m of the laminate sheet 130 may extend from either side surface (in FIG. 8, the side surface of the upper portion) of the third direction (e.g., Z-axis direction) of the stack-type electrode assembly to the second direction (e.g., Y-axis direction). In addition, the combination part 130m may extend in the third direction (e.g., Z-axis direction) from the other side. In FIG. 8, the stack-type electrode assembly is surrounded by the laminate sheet 130.

### (third embodiment)

FIG. 9 is a perspective view illustrating an important part of a secondary battery according to another embodiment of the present disclosure.

Referring to FIG. 9, the secondary battery 100 may further comprise an external collector 140. The external collector 140 may be configured to capture gas released through the check valve 128. The external collector 140 may be connected to the check valve 128 through a gas flow path 142.

In some exemplary examples, the external collector 140 may be configured to actively absorb gas released from the check valve 128. In this case, the external collector 140 may comprise a device for applying a predetermined pressure (e.g., a pressure below the first pressure) to an end of the check valve 128.

In some exemplary examples, the external collector 140 may be configured to simply capture the gas released from the check valve 128. In this case, the external collector 140 does not actively absorb the gas released from the check valve 128.

In the case of the external collector 140 is provided, the waterproof membrane 1288 may be omitted in the check valve 128.

As above, although embodiments of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of embodiments of the present disclosure will not depart from the technology of the present disclosure.

## Claims

1. A secondary battery, comprising:
a stack-type electrode assembly having a plurality of unit batteries stacked in a first direction and having electrode leads on the both ends in a second direction perpendicular to the first direction;
a multifunctional terminal block (MTB) on at least one end of the stack-type electrode assembly; and
a laminate sheet wrapping around sides of the stack-type electrode assembly to define a cell interior space,
wherein the MTB comprises:
an electrode terminal part electrically connected to the electrode leads of the stack-type electrode assembly;
a check valve configured to release gas in the cell interior space when a pressure of the gas is in excess of a first pressure; and
a rupture disk configured to rupture to release the gas when the pressure in the cell interior space increases to a second pressure in excess of the first pressure.

2. The secondary battery of claim 1, wherein the check valve is configured to change from a closed state to an open state when a pressure in the cell interior space exceeds the first pressure, and is configured to change from an open state to a closed state after the pressure of the gas in the cell interior space relieves to a pressure lower than the first pressure.

3. The secondary battery of claim 2, wherein the check valve comprises:
a conduit part in fluid communication with the cell interior space and being open to the exterior of the secondary battery;
a valve packing in the conduit part, and movable toward the exterior of the secondary battery by the pressure of the gas in the cell interior space; and
an elastic body that is configured to allow the valve packing to return to an original position of the valve packing depending on the pressure of the gas in the cell interior space.

4. The secondary battery of claim 3, wherein the conduit part comprises:
a first stop protrusion at an end of the conduit part that is closer to the cell interior space; and
a second stop protrusion on an inner circumferential surface of the conduit part and spaced apart from the first stop protrusion,
wherein the valve packing is between the first stop protrusion and the second stop protrusion, and wherein the elastic body is between the valve packing and the second stop protrusion.

5. The secondary battery of claim 3, wherein the check valve comprises an o-ring between the valve packing and the conduit part,
wherein the valve packing comprises a tapered side surface having a decreasing diameter toward the cell interior space,
wherein the tapered side surface is configured to form the closed state by being in airtight contact with the o-ring, and wherein the tapered side surface is configured to form the open state by being spaced apart from the o-ring.

6. The secondary battery of claim 3, wherein the check valve further comprises a waterproof membrane at an end of the conduit part.

7. The secondary battery of claim 6, wherein the waterproof membrane comprises a material that is permeable to carbon dioxide.

8. The secondary battery of claim 6, wherein the waterproof membrane comprises two or more thin films stacked.

9. The secondary battery of claim 8, wherein the waterproof membrane comprises a first layer of a porous type and a second layer of a non-porous type.

10. The secondary battery of claim 9, wherein the first layer comprises a fluorine-based polymeric membrane and the second layer comprises a silicone-based polymeric membrane.

11. The secondary battery of claim 3, further comprising an external collector connected in gas communication with the check valve and configured to capture gas released from the check valve.

12. The secondary battery of claim 11, wherein the conduit part does not comprise a waterproof membrane at an end thereof.

13. A secondary battery, comprising:
a stack-type electrode assembly having a plurality of unit batteries stacked in a first direction, extending in a second direction perpendicular to the first direction and having electrode leads at ends;
a multifunctional terminal block (MTB) coupled to the electrode leads of the stack-type electrode assembly; and
a laminate sheet enclosing the stack-type electrode assembly with the MTB to define a cell interior space,
wherein the MTB comprises:
an electrode terminal part electrically connected to the electrode leads of the stack-type electrode assembly;
a busbar electrically connecting the electrode lead and the electrode terminal part; and
a check valve configured to release gas in the cell interior space when a pressure of the gas is in excess of a first pressure,
wherein the check valve comprises:
a conduit part in fluid communication with the cell interior space and being open to the exterior of the secondary battery; and
a waterproof membrane at an outer end of the conduit part.

14. The secondary battery of claim 13, wherein the waterproof membrane comprises a hydrophobic material.

15. The secondary battery of claim 13, wherein the waterproof membrane has a permeation ratio of CO₂:N₂ of 4:1 to 50:1 when measured according to DIN 53536 standard.
